(19) Europäisches Patentamt / European Patent Office / Office européen des brevets

(11) **EP 3 896 365 B1**

(12) **EUROPEAN PATENT SPECIFICATION**

(45) Date of publication and mention of the grant of the patent:
**28.06.2023 Bulletin 2023/26**

(21) Application number: **19895443.0**

(22) Date of filing: **20.09.2019**

(51) International Patent Classification (IPC):
**F25B 49/02** (2006.01)   **F24F 11/86** (2018.01)
**F04C 28/08** (2006.01)   **F04C 28/28** (2006.01)
**H02P 21/05** (2006.01)

(52) Cooperative Patent Classification (CPC):
**F25B 49/022; F04C 28/08; F04C 28/28; H02P 6/08;
H02P 6/18;** F04C 2270/052; F04C 2270/605;
F04C 2270/80; F04C 2270/86; F24F 11/86

(86) International application number:
**PCT/CN2019/106827**

(87) International publication number:
**WO 2020/119210 (18.06.2020 Gazette 2020/25)**

(54) **METHOD FOR CONTROLLING THE ROTATIONAL SPEED FLUCTUATION OF A COMPRESSOR**

VERFAHREN ZUR STEUERUNG DER DREHZAHLSCHWANKUNG EINES VERDICHTERS

PROCÉDÉ DE RÉGULATION DE FLUCTUATION DE VITESSE DE ROTATION DE COMPRESSEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.12.2018 CN 201811526269**

(43) Date of publication of application:
**20.10.2021 Bulletin 2021/42**

(73) Proprietor: **Qingdao Haier Air Conditioner General
Corp., Ltd.
Qingdao, Shandong 266101 (CN)**

(72) Inventors:
• **SHI, Weipin**
  **Qingdao, Shandong 266101 (CN)**
• **LIU, Yuntao**
  **Qingdao, Shandong 266101 (CN)**
• **LIU, Guangpeng**
  **Qingdao, Shandong 266101 (CN)**
• **LI, Xiangjun**
  **Qingdao, Shandong 266101 (CN)**
• **CAO, Renyan**
  **Qingdao, Shandong 266101 (CN)**
• **XU, Beibei**
  **Qingdao, Shandong 266101 (CN)**
• **XU, Guojing**
  **Qingdao, Shandong 266101 (CN)**
• **LIU, Juke**
  **Qingdao, Shandong 266101 (CN)**
• **CHENG, Yongfu**
  **Qingdao, Shandong 266101 (CN)**
• **GAO, Baohua**
  **Qingdao, Shandong 266101 (CN)**

(74) Representative: **Peters, Sebastian Martinus
Octrooibureau Vriesendorp & Gaade B.V.
Koninginnegracht 19
2514 AB Den Haag (NL)**

(56) References cited:
CN-A- 103 967 794    CN-A- 104 038 127
US-A1- 2008 315 816    US-A1- 2011 084 638

EP 3 896 365 B1

**Description**

**Technical field**

The present invention belongs to the field of motor control technology, specifically, it relates to compressor control technology, and more specifically, it relates to a method for controlling speed fluctuation of compressor.

**Background**

Severe fluctuation in compressor speed can occur when compressor load torque in an extremely unstable state. This is due in part to refrigerant system failure or design flaw of control method, and eventually results in unstable operation of air conditioner and additional various adverse effects. The unstable operation further produces noise much higher than threshold of the system that was designed for, even exceeds relevant standards and further deteriorates user experience. The problem is particularly obvious for a single rotary compressor.

The prior art, such as CN103967794A, provides methods for controlling speed fluctuation of compressor but effects are far from satisfactory, practically the problem of rotational speed fluctuation of compressor is not fundamentally solved.

**Summary of the invention**

The object of the present invention is to provide a method for controlling speed fluctuation of compressor to improve the effectiveness of suppressing the compressor speed fluctuation.

To achieve the above-mentioned purpose of the invention, the present invention adopts the following technical solutions to achieve:

A method for controlling speed fluctuation of compressor includes: a process to control compressor according to a real-time angular velocity and a process to control compressor according to a torque;

The process to control compressor according to a real-time angular velocity including:

obtaining a shaft error $\Delta\theta$ which reflects a deviation of an actual position of a compressor rotor from an estimated position of a compressor rotor;

filtering the shaft error $\Delta\theta$ to obtain a corrected shaft error $\Delta\theta'$ in which at least a part of a shaft error fluctuation is eliminated and obtaining an angular velocity compensation amount P_out corresponding to the corrected shaft error $\Delta\theta'$;

compensating an output angular velocity $\Delta\omega$_PLL of the phase-locked loop regulator in the phase-locked loop for compressor control with the angular velocity compensation amount P_out to obtain a compensated angular velocity output $\Delta\omega'$; specifically, the compensated angular velocity output $\Delta\omega'$ = P_out + $\Delta\omega$_PLL;

correcting the real-time angular velocity $\omega 1$ which is used for compressor control according to the compensated angular velocity output and controlling the compressor according to the corrected real-time angular velocity $\omega 1$;

the step to filter the shaft error $\Delta\theta$ comprises:

expanding the shaft error $\Delta\theta$ by Fourier series to obtain a function expression of the shaft error with respect to a mechanical angle $\theta m$;

multiplying the function expression of the shaft error with $cos(\theta_{mn} + \theta_{shift\text{-}Pn})$ and $-sin(\theta_{mn} + \theta_{shift\text{-}Pn})$ respectively; extracting a d-axis component of the nth harmonic of $\Delta\theta$ and a q-axis component of the nth harmonic of $\Delta\theta$ by a low-pass filter or an integrator; $\theta\_mn$ is a mechanical angle of the nth harmonic and $\theta_{shift\text{-}Pn}$ is a phase compensation angle of the nth harmonic;

a d-axis component and a q-axis component of one or more harmonics are eliminated to complete a filtering process of the shaft error $\Delta\theta$;

the process to control compressor according to a torque including:

calculating a difference between the target angular velocity fluctuation amount and the output angular velocity to obtain a first angular velocity difference;

filtering the first angular velocity difference to obtain a filtered angular velocity in which at least a part of angular velocity fluctuation is eliminated;

inputting the filtered angular velocity as an input to the speed loop regulator in the speed loop for compressor control to obtain an output torque of the speed loop regulator;

controlling the compressor according to the output torque.

Compared with the prior art, the advantages and positive effects of the present invention are: in the phase-locked loop, fluctuation on the shaft error $\Delta\theta$ which reflects the deviation between the actual position and the estimated position of the compressor rotor is eliminated, and then the angular velocity compensation amount, which corresponds to the corrected shaft error in which at least part of fluctuation is filtered out, is added to the output angular velocity of the phase-locked loop regulator to obtain the compensated angular velocity output, and then the real-time angular velocity of the compressor is corrected according to the compensated angular velocity output; when the compressor is controlled by the corrected real-time angular velocity, it could make a variation from the target speed and a phase close to the variation and phase of the actual speed, so the operation of the compressor tends to be stable. Moreover, because fluctuation on the shaft error is a direct front-end cause to fluctuation on the speed, the elimination at the front end could reduce a periodic fluctuation on the shaft error, and the speed fluctuation could be more directly and quickly suppressed so as to improve the effectiveness of speed control; while in the speed loop control, the difference between the output angular velocity output by the phase-lock loop regulator and the target angular velocity fluctuation amount is filtered; the filtered angular velocity in which at least a part of angular velocity fluctuation is removed is input to the speed loop regulator as an input, which is capable of reducing fluctuation on the output torque of the speed loop regulator; the compressor will be controlled according to the output torque so that fluctuation on compressor speed is reduced and the operation is more stable, which is also beneficial to energy saving and vibration reduction.

After reading the specific embodiments of the present invention in conjunction with the accompanying drawings, other features and advantages of the present invention will become clearer.

## Description of the drawings

Fig.1 is a partial flow chart of a method for controlling speed fluctuation of compressor according to one aspect of the present invention;
Fig.2 is a partial flow chart of a method for controlling speed fluctuation of compressor according to one aspect of the present invention;
Fig.3 is a control block diagram based on the method shown in Fig.1 and Fig.2;
Fig.4 is a logical block diagram of a specific example of a shaft error fluctuation filtering algorithm in Fig.3;
Fig.5 is a logical block diagram of a specific example of a speed fluctuation extraction algorithm in Fig.3.

## Detailed Description

In order to make the objectives, technical solutions and advantages of the present invention clear, the following will further describe the present invention in detail with reference to the accompanying drawings and embodiments.

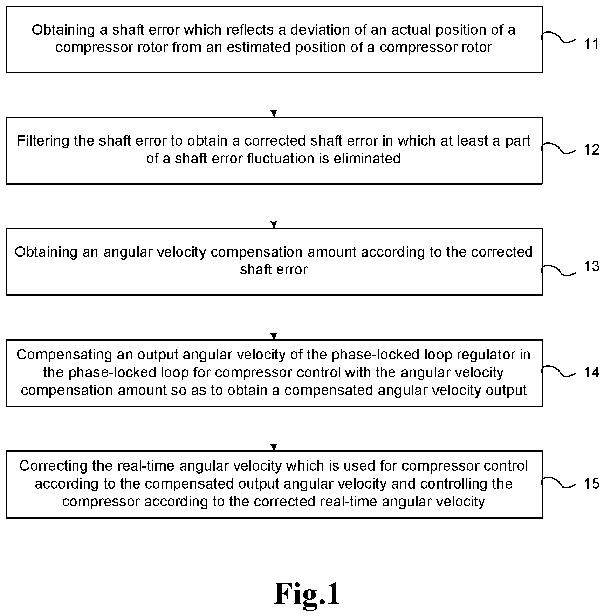

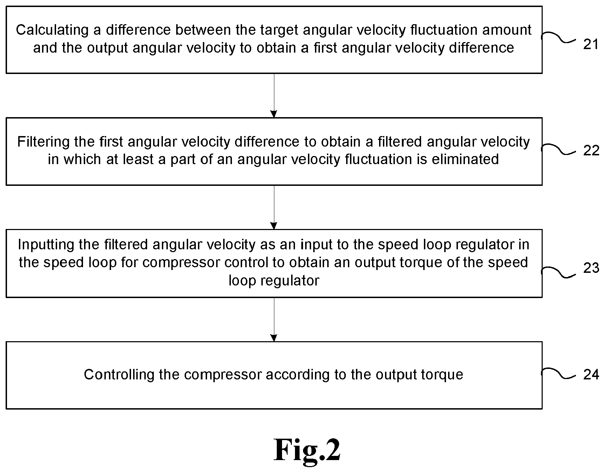

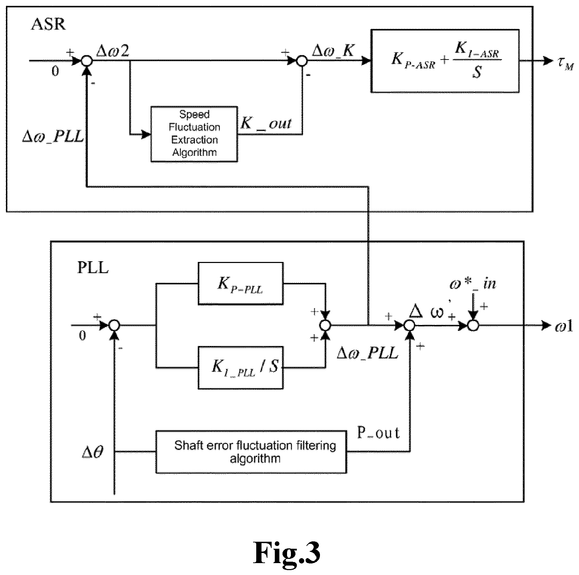

Fig.1 is a partial flow chart of a method for controlling speed fluctuation of compressor according to one aspect of the present invention and Fig.2 is another partial flow chart of the method for controlling speed fluctuation of compressor shown in Fig.1. The method for controlling speed fluctuation of compressor includes a process to control compressor according to a real-time angular velocity, which is shown in Fig.1 and a process to control compressor according to a torque. Referring to Fig.1 and Fig.2, and a control block diagram shown in Fig.3, the two processes are described in detail as follows.

Fig.1 is a partial flow chart of an embodiment of a method for controlling speed fluctuation of compressor according to one aspect of the present invention; to be specific it is a flow chart of the process to control compressor according to a real-time angular velocity. The process includes the following steps:

Step 11, obtaining a shaft error $\Delta\theta$ which reflects a deviation of an actual position of a compressor rotor from an estimated position of a compressor rotor.

Compressor control methods involve a phase-locked loop (PLL) technology to lock a phase of the compressor at a target phase. A control block diagram of PLL is shown in Fig.3. A typical phase-locked loop (PLL) of compressor in the prior art comprise a phase-locked loop regulator which is preferably a proportional integral regulator marked by $K_{P\_PLL}$ and $K_{I\_PLL}/S$ in Fig. 3, wherein $K_{P\_PLL}$ and $K_{I\_PLL}$ are closed-loop gain parameters of the phase-locked loop. The shaft error $\Delta\theta$ is used as a part of an input of the phase-locked loop regulator. To be specific, a difference between the shaft error $\Delta\theta$ and a target angle fluctuation amount (as an example the target angle fluctuation amount is set as 0 in Fig.3) is input to the phase-locked loop regulator and the phase-locked loop regulator outputs an output angular velocity $\Delta\omega\_PLL$, which is used by the phase-locked loop to output a real-time angular velocity $\omega1$ for the compressor control, and specifically to control a position of the compressor rotor according to the real-time angular velocity $\omega1$.

The shaft error $\Delta\theta$ reflecting the deviation of the actual position of the compressor rotor from the estimated position could be calculated by the following formula:

$$\Delta\theta = tan^{-1}\frac{V_d^* - r^*I_d + \omega_1 L_q^* I_q}{V_q^* - r^*I_q + \omega_1 L_q^* I_d}$$

wherein Vd is a given value of a d-axis voltage of the compressor, $V_q^*$ is a given value of q-axis voltage of the compressor, $I_d$ is a real-time d-axis current of the compressor, $I_q$ is a real-time q-axis current of the compressor, r* is a motor resistance of the compressor, $L_q^*$ is a q-axis inductance of the compressor, ω_1 is a real-time angular frequency of the compressor; wherein parameters $I_d$, $I_q$ and ω1 are detected in real time by detection means known in the prior art, and the other parameter values are known values.

Step 12: Filtering the shaft error $\Delta\theta$ to obtain a corrected shaft error $\Delta\theta$' in which at least a part of a shaft error fluctuation is eliminated.

Due to the fact that the shaft error is used as a part of the input of the phase-locked loop, it definitely has influence on the real-time angular velocity of the compressor output by the phase-locked loop. If the shaft error is subject to a severe fluctuation, the real-time angular velocity output by the phase-locked loop will be in variation, which further results in a problem that the rotor could not able to be held at the target phase stably which further leads to failures of the compressor such as over-current or out-of-step.

After the shaft error $\Delta\theta$ is obtained in Step 11, the step to filter the shaft error $\Delta\theta$ is disclosed so as to obtain a corrected shaft error $\Delta\theta$' in which at least a part of the shaft error fluctuation is eliminated.

Wherein the filtering of the shaft error $\Delta\theta$ includes:
Firstly, the shaft error $\Delta\theta$ is expanded by Fourier series so as to obtain a function expression of the shaft error with respect to a mechanical angle θm.

Then the function expression of the shaft error multiplies with $cos(\theta_{mn} + \theta_{shift-Pn})$ and $-sin(\theta_{mn} + \theta_{shift-Pn})$ respectively; a d-axis component of the nth harmonic of $\Delta\theta$ and a q-axis component of the nth harmonic of $\Delta\theta$ are extracted through a low-pass filter or an integrator; θ_mn is a mechanical angle of the nth harmonic of $\Delta\theta$ and $\theta_{shift-Pn}$ is the phase compensation angle of the nth harmonic of $\Delta\theta$.

Optionally d-axis components and q-axis components of one or more harmonics are eliminated to finish a filtering process of the shaft error $\Delta\theta$.

A detailed description of the filtering process is following with reference to Fig.3

Step 13: Obtaining an angular velocity compensation amount P_out corresponding to the corrected shaft error $\Delta\theta$'.

This step could be implemented by methods disclosed in the prior art which are utilized to calculate an angular velocity according to an angle. A preferred processing method could refer to a description as follows.

The Step 12 and Step 13 are shown in the control block diagram of Fig.3, and it is to adopt a fluctuation filtering algorithm on the shaft error $\Delta\theta$ to obtain the angular velocity compensation amount P_out.

Step 14: Compensating an output angular velocity Δω_PLL of the phase-locked loop regulator in the phase-locked loop for compressor control with the angular velocity compensation amount P_out so as to obtain a compensated angular velocity output Δω'; specifically, the compensated angular velocity output Δω' = P_out + Δω_PLL.

Step 15: Correcting the real-time angular velocity ω1 which is used for compressor control according to the compensated angular velocity output and controlling the compressor according to the corrected real-time angular velocity ω1.

To be specific, a method to determine the real-time angular velocity corresponding to a target angular velocity fluctuation amount which is 0 of a speed loop control below includes: referring to Fig.3, it is specifically to add the compensated angular velocity output Δω' to an angular velocity command ω*_in to output the real-time angular velocity ω1 which is used for compressor control; wherein the angular velocity command w*_in is an angular velocity value given by the compressor control system, and the method for determining the value of the given angular velocity command w*_in is implemented by methods disclosed in the prior art. The method to determine the real-time angular velocity corresponding to a target angular velocity fluctuation amount which is 0 of a speed loop control, and also on the basis of the output angular velocity Δω_PLL of the phase-locked loop regulator and the given angular velocity command ω*_in, the compressor control is more accurate and stable.

Fig.2 is a partial flow chart of an embodiment of a method for controlling speed fluctuation of compressor according to one aspect of the present invention; to be specific it is a flow chart of the process to control compressor according to a torque. The process includes the following steps:
Step 21: Calculating a difference between the target angular velocity fluctuation amount and the output angular velocity to obtain a first angular velocity difference.

Compressor control methods involve a speed loop (ASR: Automatic Speed Regulator) technology to control a speed of the compressor rotor which aims at adjusting the speed of the compressor close to a set speed. Referring to the block diagram of Fig.3, the speed loop includes a speed loop regulator which is preferably a proportional integral regulator marked by $K_{P\_ASR}$ and $K_{I\_ASR}/S$ in Fig.3.

Step 21 specifically includes: obtaining the output angular velocity $\Delta\omega\_PLL$ of the phase-locked loop regulator; calculating the difference between the target angular velocity fluctuation amount and the output angular velocity $\Delta\omega\_PLL$ of the phase-locked loop regulator, which is the first angular velocity difference $\Delta\omega2$; wherein the target angular velocity fluctuation amount is a desired angular velocity fluctuation amount which is a known input amount. In the present embodiment, the target angular velocity fluctuation amount is 0.

Step 22: Filtering the first angular velocity difference to obtain a filtered angular velocity in which at least a part of angular velocity fluctuation is eliminated.

Due to the fact that the first angular velocity difference is used as a part of the input of the speed loop regulator, it definitely has influence on an output torque output by the speed loop. If the first angular velocity difference is subject to a severe fluctuation, the output torque will be in variation, which further results in a problem that the rotor fluctuates greatly. Therefore after obtaining the first angular velocity difference in Step 22, it is preferable that the first angular velocity difference is filtered out in the first place to at least remove a part of angular velocity fluctuation and obtain the filtered angular velocity $\Delta\omega\_K$. The filtering of the angular velocity could be implemented by filtering algorithms disclosed in the prior art. A preferred filtering process could refer to a description as follows.

Step 23: inputting the filtered angular velocity as an input to the speed loop regulator in the speed loop for compressor control to obtain an output torque $\tau_M$ of the speed loop regulator.

Step 24: controlling the compressor in the air conditioner according to the output torque. The specific control process could refer to methods disclosed by the prior art.

The method disclosed by the present embodiment shown in Fig.1 and Fig.2 realizes a dual-loop control, namely the speed loop and the phase-locked loop on compressor. Additionally, in the phase-locked loop, fluctuation on the shaft error $\Delta\theta$ which reflects the deviation between the actual position and the estimated position of the compressor rotor is eliminated, and then the angular velocity compensation amount, which corresponds to the corrected shaft error in which at least part of fluctuation is filtered out, is added to the output angular velocity of the phase-locked loop regulator to obtain the compensated angular velocity output, and then the real-time angular velocity of the compressor is corrected according to the compensated angular velocity output; when the compressor is controlled by the corrected real-time angular velocity, it could make a variation from the target speed and a phase close to the variation and phase of the actual speed, so the operation of the compressor tends to be stable. Moreover, because fluctuation on the shaft error is a direct front-end cause to fluctuation on the speed, the elimination at the front end could reduce a periodic fluctuation on the shaft error, and the speed fluctuation could be more directly and quickly suppressed so as to improve the effectiveness of speed control; while in the speed loop control, the difference between the output angular velocity output by the phase-lock loop regulator and the target angular velocity fluctuation amount is filtered; the filtered angular velocity in which at least a part of angular velocity fluctuation is removed is input to the speed loop regulator as an input, which is capable of reducing fluctuation on the output torque of the speed loop regulator; the compressor will be controlled according to the output torque so that fluctuation on compressor speed is reduced and the operation is more stable, which is also beneficial to energy saving and vibration reduction.

In a preferable embodiment, the step to filter the shaft error $\Delta\theta$ to obtain the corrected shaft error $\Delta\theta'$ in which at least part of the shaft error fluctuation is filtered out specifically includes: filtering the shaft error $\Delta\theta$ to at least remove a d-axis component of and a q-axis component of the first harmonic so as to realize the filtering of the first harmonic component of $\Delta\theta$ and to obtain the corrected shaft error $\Delta\theta'$ in which at least the first harmonic component is filtered out. As a more preferred embodiment, the step to filter the shaft error $\Delta\theta$ to obtain the corrected shaft error $\Delta\theta'$ in which at least part of the shaft error fluctuation is filtered out further includes: filtering the shaft error $\Delta\theta$ to remove a d-axis component of and a q-axis component of the second harmonic so as to realize the filtering of the first and second harmonic component of $\Delta\theta$ and to obtain the corrected shaft error $\Delta\theta'$ in which at least the first and second harmonic components are filtered out. By means of filtering the first harmonic component in $\Delta\theta$, or by means of filtering the first harmonic component and the second harmonic component, most of the fluctuation components in $\Delta\theta$ could be removed, and the calculation amount is acceptable and the filtering speed is fast.

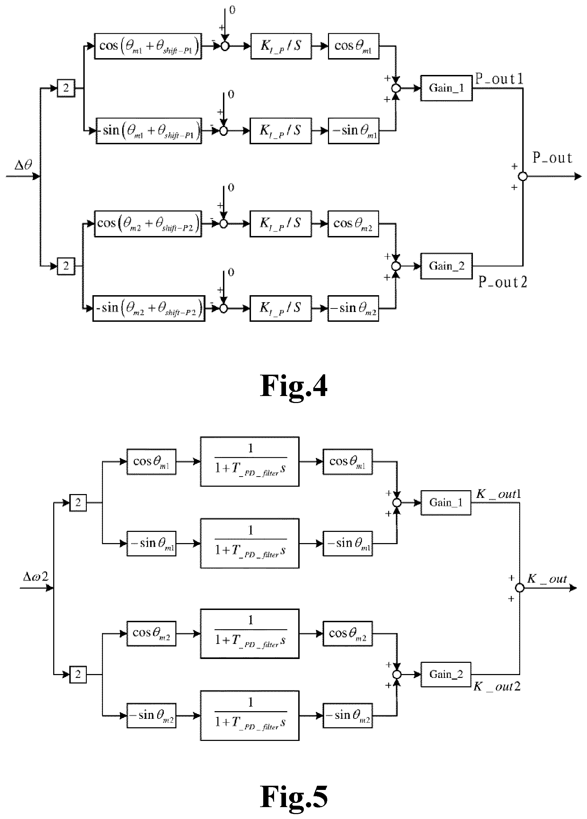

Fig.4 is a specific logical block diagram of an example of the shaft error fluctuation filtering algorithm shown in Fig.3, and to be specific is a logic block diagram to obtain the angular velocity compensation amount P_out corresponding to a corrected shaft error $\Delta\theta'$ in which the first harmonic component and the second harmonic component of the shaft error $\Delta\theta$ is removed. Shown in Fig.4, the specific process to obtain the angular velocity compensation amount P_out corresponding to a corrected shaft error $\Delta\theta'$ which is obtained by removing the first harmonic component and the second harmonic component of the shaft error $\Delta\theta$ includes:

Firstly the shaft error $\Delta\theta$ is expanded by Fourier series so as to obtain a function expression of the shaft error $\Delta\theta$ with respect to a mechanical angle $\theta m$, especially includes:

$$\Delta\theta(\varphi) = \frac{1}{2}\Delta\theta_{DC} + \sum_{n=1}\left(\left(\Delta\theta_{peak\_n}\cos\phi_n\right)\cos n\varphi - \left(\Delta\theta_{peak\_n}\sin\phi_n\right)\sin n\varphi\right)$$

$$= \frac{1}{2}\Delta\theta_{DC} + \sum_{n=1}\left(\Delta\theta_{d\_n}\cos n\varphi - \Delta\theta_{q\_n}\sin n\varphi\right)$$

wherein $\Delta\theta_{DC}$ is a direct current component of the shaft error,

$$\theta_{d\_n} = \theta_{peak\_n}\cos\phi_n, \quad \theta_{q\_n} = \theta_{peak\_n}\sin\phi_n, \quad \varphi = \theta_{m1} \quad ;$$

$\Delta\theta_{peak\_n}$ is a fluctuation amplitude on the nth harmonic of the shaft error;
$\theta_{m1}$, $\theta_{m2}$ are the first harmonic mechanical angle and the second harmonic mechanical angle;
and the second harmonic mechanical angle $\theta_{m2}$ is expressed as: $\theta_{m2} = 2\theta_{m1}$.

The first harmonic component and the second harmonic component are extracted from the function expression, and an integrator is used to remove the first harmonic component and the second harmonic component to obtain the filtering result.

To be specific either a low-pass filtering method or an integration method could be used to extract the first harmonic component and the second harmonic component from the function expression. As shown in Fig.4 the function expression is multiplied by $cos(\theta_{m1}+\theta_{shift-P1})$ and $cos(\theta_{m2}+\theta_{shift-P2})$ respectively, a result could be filtered by a low-pass filter or alternatively be input to an integrator to calculate an average of integrals within a preset period to extract the d-axis component of the first harmonic of the axis error $\Delta\theta$ and the d-axis component of the second harmonic of the axis error $\Delta\theta$; the function expression is multiplied with $-sin(\theta_{m1}+\theta_{shift-P1})$ and $-sin(\theta_{m2}+\theta_{shift-P2})$ respectively, a result could be filtered by a low-pass filter or alternatively be input to an integrator to calculate an average of integrals within a preset period to extract the q-axis component of the first harmonic of the axis error $\Delta\theta$ and the q-axis component of the second harmonic of the axis. The d-axis component, q-axis component of the first harmonic and the d-axis component and q-axis component of the second harmonic are respectively diminished by 0, and are respectively input into an integrator $K_{I\_P}/S$ for filtering by the integrator to remove the d-axis component, q-axis component of the first harmonic and the d-axis component and q-axis component of the second harmonic. Accordingly filtering results in which the first harmonic component and the second harmonic component are removed are obtained, which start to be represented by an angular velocity, wherein $\theta_{shift-P1}$ is a phase compensation angle of the first harmonic and $\theta_{shift-P2}$ is a phase compensation angle of the second harmonic; $\theta_{shift-P1}$ and $\theta_{shift-P2}$ could be a pair of equal preset fixed values, or a pair of preset different values or a pair of variable angle values.

As a preferred embodiment, the two phase compensation angles $\theta_{shift-P1}$ and $\theta_{shift-P2}$ are equal which are determined according to the closed-loop gain parameters $K_{P\_PLL}$ and $K_{I\_PLL}$ and the angular velocity command $\omega^*\_in$ of the phase-locked loop and satisfy:

$$\theta_{shift-Pn} = (aK_{P\_PLL} + bK_{I-PLL} + c\left.K_{\_PLL}\middle/K_{I\_PLL}\right. + d\omega^*\_in)*\pi$$

wherein a, b, c, d are constant coefficients, and for a control system, the constant coefficients are fixed.

Each filtered result is subjected to inverse Fourier transform to obtain the angular velocity compensation amount P_out corresponding to the corrected shaft error $\Delta\theta'$ in which the first harmonic component and the second harmonic component are removed; to be specific, the filtered result in which the d-axis component of the first harmonic is subjected to inverse Fourier transform to obtain a result and the filtered result in which the q-axis component of the first harmonic is also subjected to inverse Fourier transform to obtain another result, and the two results are added to obtain the angular velocity compensation amount P_out1 corresponding to the corrected shaft error in which the first harmonic is removed; the filtered result in which the d-axis component of the second harmonic is subjected to inverse Fourier transform to obtain a result and the filtered result in which the q-axis component of the second harmonic is also subjected to inverse Fourier transform to obtain another result, and the two results are further added to obtain the angular velocity compensation amount P_out2 corresponding to the corrected shaft error in which the second harmonic is removed; a sum of the angular velocity compensation amount P_out1 and the angular velocity compensation amount P_out2 is the angular velocity compensation amount corresponding to the corrected shaft error in which the first harmonic and the second harmonic are removed, P_out = P_out1+P_out2.

As a preferred embodiment, enable switches are added, which are used to control the filtering of the harmonic components. To be specific, as shown in Fig.4, Gain_1 and Gain_2 are enable switches configured to initiate or terminate the filtering algorithm: when the enable switches Gain_1 and Gain_2 are in a state to initiate the filtering algorithm of the first harmonic and the filtering algorithm of the second harmonic, the angular velocity compensation amount P_out = P_out1 + P_out2 corresponding to the corrected shaft error Δθ' in which the first harmonic and the second harmonic are removed is obtained; when the enable switches Gain_1 and Gain_2 are in a state to terminate the filtering algorithm of the first harmonic and the filtering algorithm of the second harmonic, the function to filter the shaft error is terminated and the angular velocity compensation amount P_out could not be output further ; when one enable switch is in a state to initiate the filtering algorithm and the other enable switch is in a state to terminate the filtering algorithm, the angular velocity compensation amount P_out obtained is either an angular velocity compensation amount in which merely the first harmonic is removed (enable switch Gain_1 is in a state to initiate the filtering algorithm and enable switch Gain_2 is in a state to terminate the filtering algorithm ) or an angular velocity compensation amount in which merely the second harmonic is removed (enable switch Gain_1 is in a state to terminate the filtering algorithm and enable switch Gain_2 is in a state to initiate the filtering algorithm ).

In an embodiment to merely remove the first harmonic component, the process disclosed in Fig.4 to extract and remove the first harmonic component could be directly adopted. It is undoubtedly that in the embodiment to merely remove the first harmonic component, an enable switch could be added to control the filtering of the first harmonic component and its specific implementation is shown in Fig.4 which is not repeated.

In a preferred embodiment, the step to filter the first angular velocity difference Δω2 to obtain the filtered angular velocity Δω_K in which at least a part of angular velocity fluctuation is removed specifically includes: using a velocity fluctuation extraction algorithm to extract a part of angular fluctuation K_out from the first angular velocity difference Δω2 and calculating a difference between the first angular velocity difference Δω2 and the part of angular fluctuation K_out and the difference is determined as the filtered angular velocity Δω_K.

In a preferred embodiment, the steps that using a velocity fluctuation extraction algorithm to extract a part of angular fluctuation from the first angular velocity difference and calculating a difference between the first angular velocity difference and the part of angular fluctuation and the difference is determined as the filtered angular velocity specifically comprises: using the velocity fluctuation extraction algorithm to extract at least a first harmonic component in the first angular velocity difference and the first harmonic component is determined as the part of angular velocity fluctuation; calculating a difference between the first angular velocity difference and the first harmonic component and the difference is determined as the filtered angular velocity in which at least the first harmonic component is removed. In another preferred embodiment, the steps that using a velocity fluctuation extraction algorithm to extract a part of angular fluctuation from the first angular velocity difference and calculating a difference between the first angular velocity difference and the part of angular fluctuation and the difference is determined as the filtered angular velocity specifically comprises: using the velocity fluctuation extraction algorithm to extract a first harmonic component and a second harmonic component in the first angular velocity difference and a sum of the first harmonic component and the second harmonic component is determined as the part of angular velocity fluctuation; calculating a difference between the first angular velocity difference and the sum of the first harmonic component and the second harmonic component and the difference is determined as the filtered angular velocity in which the first harmonic component and the second harmonic component are removed. By means of filtering the first harmonic component in the first angular velocity, or filtering the first harmonic component and the second harmonic component, most of the fluctuation components in the first angular velocity difference could be removed, and the calculation amount is acceptable and filtering speed is fast.

Fig.5 is a logical block diagram of a specific example of the velocity fluctuation extraction algorithm shown in Fig.3. Specifically, Fig.5 is a logical block diagram of a specific example in which a first harmonic component and a second harmonic component are extracted from the first angular velocity difference to obtain the part of angular fluctuation. Referring to Fig.5, a method to obtain the part of angular fluctuation including the first harmonic component and the second harmonic component comprises:

Expanding the first angular velocity difference Δω2 by Fourier series to obtain a function expression of the first angular velocity difference Δω2 with respect to a mechanical angle $\theta m$; and this process could be implemented by methods disclosed by the prior art which will not be illustrated further.

Extracting the first harmonic component and the second harmonic component from the function expression;

Specifically, as shown in Fig.5, the step includes: multiplying the function expression by $\cos\theta_{m1}$; filtering the result by a low-pass filter $\dfrac{1}{1+T_{\_PD\_filter}S}$ ; performing inverse Fourier transform on the filtered result to obtain a d-axis component of a first harmonic; multiplying the function expression by $-\sin\theta m1$; filtering the result by a low-pass filter

$$\frac{1}{1+T_{\_PD\_filter}S}$$ ; performing inverse Fourier transform on the filtered result to obtain a q-axis component of a first harmonic; adding the d-axis component of the first harmonic and the q-axis component of the first harmonic to obtain a first harmonic component K_*out1* of the first angular velocity difference; similarly multiplying the function expression by cosθm2; filtering the result by a low-pass filter $\frac{1}{1+T_{\_PD\_filter}S}$ ; performing inverse Fourier transform on the filtered result to obtain a d-axis component of a second harmonic; multiplying the function expression by -sinθm2;

filtering the result by a low-pass filter $\frac{1}{1+T_{\_PD\_filter}S}$ ; performing inverse Fourier transform on the filtered result to obtain a q-axis component of a second harmonic; adding the d-axis component of the second harmonic and the q-axis component of the second harmonic to obtain a second harmonic component K_*out2* of the second angular velocity difference; finally adding the first harmonic component K_*out1* and the second harmonic component K_*out2* to obtain a sum which is determined as the part of angular velocity fluctuation K_out, wherein $\theta m1$ is a first harmonic mechanical angle in the function expression of Fourier series expansion, $\theta m2$ is a second harmonic mechanical angle in the function expression of Fourier series expansion, and $\theta_{m2}=2\theta_{m1}$, $T_{\_PD\_filter}$ is a time constant of the low-pass filter.

After obtaining the part of angular velocity fluctuation K_*out* in which the first harmonic component and the second harmonic component are included, a difference between the first angular velocity difference Δω2 and the part of angular velocity fluctuation K_out is calculated to serve as the filtered angular velocity Δω_K and the filtered angular velocity Δω_K is the filtered angular velocity in which the first harmonic component and the second harmonic component are removed.

As a preferred embodiment, enable switches are added, which are used to control the extraction of the harmonic components. To be specific, as shown in Fig.5, Gain_1 and Gain_2 are enable switches configured to initiate or terminate the extraction algorithm function: when the enable switches Gain_1 and Gain_2 are in a state to initiate the extraction function of the first harmonic and the extraction function of the second harmonic, the part of angular velocity fluctuation constituted by the first harmonic component and the second harmonic component is obtained: K_out = K_out1 + K_out2; when the enable switches Gain_1 and Gain_2 are in a state to terminate the extraction function of the first harmonic and the extraction function of the second harmonic, the function to extract speed fluctuation is terminated and the part of angular velocity fluctuation K_out is 0; when one enable switch is in a state to initiate the extraction function and the other enable switch is in a state to terminate the extraction function, the part of angular velocity fluctuation K_out obtained is either a first harmonic component in the first angular velocity difference (enable switch Gain_1 is in a state to initiate the first harmonic extraction function and enable switch Gain_2 is in a state to terminate the extraction function ) or a second harmonic component in the first angular velocity difference (enable switch Gain_1 is in a state to terminate the extraction function and enable switch Gain_2 is in a state to initiate the extraction function ).

In an embodiment in which only the first harmonic component is extracted, the process of extracting the first harmonic component in Fig.5 can be directly adopted; and the control of the first harmonic extraction can also be realized by adding an enable switch, which could refer to Fig.5 and is not repeated further.

The above embodiments are only used to illustrate the technical solutions of the present invention, but not to limit them; although the present invention has been described in detail with reference to the foregoing embodiments, for those of ordinary skill in the art, the technical solutions of the foregoing embodiments can still be described. The invention is defined by the appended claims.

**Claims**

1. A method for controlling speed fluctuation of compressor, **characterized in that** the method includes: a process to control compressor according to a real-time angular velocity and a process to control compressor according to a torque;

   the process to control compressor according to a real-time angular velocity including:

   obtaining a shaft error $\varDelta\theta$ which reflects a deviation of an actual position of a compressor rotor from an estimated position of a compressor rotor (11);
   filtering the shaft error $\varDelta\theta$ to obtain a corrected shaft error $\varDelta\theta'$ in which at least a part of a shaft error fluctuation is eliminated (12) and obtaining an angular velocity compensation amount P_out corresponding to the corrected shaft error $\Delta\theta'$ (13);

compensating an output angular velocity $\Delta\omega\_PLL$ of a phase-locked loop regulator in a phase-locked loop for compressor control with the angular velocity compensation amount P_out to obtain a compensated angular velocity output $\Delta\omega'$ (14); the compensated angular velocity output $\Delta\omega' = P\_out + \Delta\omega\_PLL$;

correcting the real-time angular velocity $\omega1$ which is used for compressor control according to the compensated angular velocity output $\Delta\omega'$ and controlling the compressor according to the corrected real-time angular velocity $\omega1$ (15);

wherein the step to filter the shaft error $\Delta\theta$ (12) comprises:

expanding the shaft error $\Delta\theta$ by Fourier series to obtain a function expression of the shaft error with respect to a mechanical angle $\theta m$;

multiplying the function expression of the shaft error with $cos(\theta_{mn} + \theta_{shift\text{-}Pn})$ and $-sin(\theta_{mn} + \theta_{shift\text{-}Pn})$ respectively; extracting a d-axis component of a nth harmonic of $\Delta\theta$ and a q-axis component of a nth harmonic of $\Delta\theta$ by a low-pass filter or an integrator; wherein $\theta\_mn$ is a mechanical angle of a nth harmonic and $\theta_{shift\text{-}Pn}$ is a phase compensation angle of a nth harmonic; and

eliminating a d-axis component and a q-axis component of one or more harmonics to complete a filtering process of the shaft error $\Delta\theta$;

the process to control compressor according to a torque including:

calculating a difference between a target angular velocity fluctuation amount and the output angular velocity output by the phase-locked loop regulator to obtain a first angular velocity difference (21);

filtering the first angular velocity difference to obtain a filtered angular velocity in which at least a part of angular velocity fluctuation is eliminated (22);

inputting the filtered angular velocity as an input to a speed loop regulator in a speed loop for compressor control to obtain an output torque of the speed loop regulator (23);

controlling the compressor according to the output torque (24).

2. The method according to claim 1, **characterized in that**, the step that filtering the shaft error $\Delta\theta$ to obtain a corrected shaft error $\Delta\theta'$ in which at least a part of a shaft error fluctuation is eliminated (12) further includes:

filtering the shaft error $\Delta\theta$ to at least remove a d-axis component a first harmonic of and a q-axis component of a first harmonic to realize the filtering of the first harmonic component of $\Delta\theta$ and to obtain the corrected shaft error $\Delta\theta'$ in which at least the first harmonic component is removed.

3. The method according to claim 2, **characterized in that**, the step that filtering the shaft error $\Delta\theta$ to obtain a corrected shaft error $\Delta\theta'$ in which at least a part of a shaft error fluctuation is eliminated (12) further includes:

filtering the shaft error $\Delta\theta$ to remove a d-axis component of a second harmonic and a q-axis component of a second harmonic to realize the filtering of the first harmonic component of $\Delta\theta$ and the second harmonic component of $\Delta\theta$ and to obtain the corrected shaft error $\Delta\theta'$ in which the first harmonic component and the second harmonic component are removed.

4. The method according to claim 1, **characterized in that**, the step that eliminating a d-axis component and a q-axis component of one or more harmonics to complete a filtering process of the shaft error $\Delta\theta$ further includes:

extracting a d-axis component of a nth harmonic of $\Delta\theta$ and a q-axis component of a nth harmonic of $\Delta\theta$ by an integrator;

the method further includes:

each filtered result is subjected to inverse Fourier transform to obtain the angular velocity compensation amount P_out corresponding to the corrected shaft error $\Delta\theta'$ in which one or more harmonic components are removed.

5. The method according to claim 1, **characterized in that**, a phase compensation angle $\theta_{shift\text{-}Pn}$ is determined according to closed-loop gain parameters $K_{P\_PLL}$ and $K_{I\_PLL}$ and an angular velocity command $\omega^*\_in$ of the phase-locked loop, which satisfies:

$$\theta_{shift\text{-}Pn} = (aK_{P\_PLL} + bK_{I\text{-}PLL} + c\left.K_{P\_PLL}\middle/K_{I\_PLL}\right. + d\omega^*\_in) * \pi$$

wherein a, b, c, d are constant coefficients.

6. The method according to any one of claim 1 to 5, **characterized in that**, the step that filtering the first angular velocity difference to obtain a filtered angular velocity in which at least a part of angular velocity fluctuation is eliminated (22) further includes:
using a velocity fluctuation extraction algorithm to extract a part of angular fluctuation from the first angular velocity difference; calculating a difference between the first angular velocity difference and the part of angular fluctuation, and the difference is determined as the filtered angular velocity.

7. The method according to any one of claim 6, **characterized in that**, the steps that using a velocity fluctuation extraction algorithm to extract a part of angular fluctuation from the first angular velocity difference; calculating a difference between the first angular velocity difference and the part of angular fluctuation, and the difference is determined as the filtered angular velocity further includes:
using the velocity fluctuation extraction algorithm to extract at least a first harmonic component in the first angular velocity difference and the first harmonic component is determined as the part of angular velocity fluctuation; calculating a difference between the first angular velocity difference and the first harmonic component and the difference is determined as the filtered angular velocity in which at least the first harmonic component is removed.

8. The method according to any one of claim 7, **characterized in that**, the step that using the velocity fluctuation extraction algorithm to extract at least a first harmonic component in the first angular velocity difference further includes:

expanding the first angular velocity difference by Fourier series to obtain a function expression of the first angular velocity difference with respect to a mechanical angle $\theta m$;
extracting a d-axis component of a first harmonic and a. q-axis component of a first harmonic from the function expression;
adding the d-axis component of the first harmonic and the q-axis component of the first harmonic to obtain the first harmonic component in the first angular velocity difference.

9. The method according to any one of claim 7, **characterized in that**, the step that using a velocity fluctuation extraction algorithm to extract a part of angular fluctuation from the first angular velocity difference further includes:

using the velocity fluctuation extraction algorithm to extract a second harmonic component in the first angular velocity difference, and a sum of the first harmonic component and the second harmonic component is determined as the part of angular velocity fluctuation;
the step that calculating a difference between the first angular velocity difference and the part of angular fluctuation and the difference is determined as the filtered angular velocity further includes:
calculating a difference between the first angular velocity difference and the sum of the first harmonic component and the second harmonic component and the difference is determined as the filtered angular velocity in which the first harmonic component and the second harmonic component are removed.

10. The method according to any one of claim 1, **characterized in that**, the target angular velocity fluctuation amount is 0; the step that correcting the real-time angular velocity ω1 which is used for compressor control according to the compensated angular velocity output Δω' and controlling the compressor according to the corrected real-time angular velocity ω1 (15) further includes:
adding the compensated angular velocity output Δω' to an angular velocity command and the sum is determined as the corrected real-time angular velocity ω1 which is used for compressor control.

**Patentansprüche**

1. Verfahren zum Steuern von Drehzahlschwankungen eines Verdichters, **dadurch gekennzeichnet, dass** das Verfahren enthält: einen Prozess zum Steuern eines Verdichters gemäß einer Echtzeitwinkelgeschwindigkeit und einen Prozess zum Steuern eines Verdichters gemäß einem Drehmoment;

wobei der Prozess zum Steuern eines Verdichters gemäß einer Echtzeitwinkelgeschwindigkeit enthält:

Erhalten eines Wellenfehlers $\Delta\theta$, der eine Abweichung einer tatsächlichen Position eines Verdichterrotors von einer geschätzten Position eines Verdichterrotors wiedergibt (11);

Filtern des Wellenfehlers $\Delta\Theta$, um einen korrigierten Wellenfehler $\Delta\Theta$ zu erhalten, bei dem zumindest ein Teil einer Wellenfehlerschwankung beseitigt ist (12), und Erhalten einer Winkelgeschwindigkeits-kompensationsmenge P_out, die dem korrigierten Wellenfehler $\Delta\Theta$' entspricht (13);

Kompensieren einer Ausgangswinkelgeschwindigkeit $\Delta\omega$_PLL eines Phasenregelschleifereglers in einer Phasenregelschleife zur Verdichtersteuerung mit der Winkelgeschwindigkeitskompensationsmenge P_out, um eine kompensierte Winkelgeschwindigkeitsausgabe $\Delta\omega$' zu erhalten (14); wobei die kompensierte Winkelgeschwindigkeitsausgabe $\Delta\omega$' = P_out + $\Delta\omega$_PLL ist;

Korrigieren einer Echtzeitwinkelgeschwindigkeit $\omega 1$, die zur Verdichtersteuerung benutzt wird, gemäß der kompensierten Winkelgeschwindigkeitsausgabe $\Delta\omega$' und Steuern des Verdichters gemäß der korrigierten Echtzeitwinkelgeschwindigkeit $\omega 1$ (15);

wobei der Schritt zum Filtern des Wellenfehlers $\Delta\Theta$ (12) umfasst:

Expandieren des Wellenfehlers $\Delta\Theta$ durch Fourier-Reihen, um einen Funktionsausdruck des Wellenfehlers bezüglich eines mechanischen Winkels ein zu erhalten;

Multiplizieren des Funktionsausdrucks des Wellenfehlers mit $cos(\Theta_{mn} + \Theta_{shift-Pn})$ bzw. $-sin(\Theta_{mn} + \Theta_{shift-Pn})$;

Extrahieren einer d-Achsen-Komponente einer n-ten Harmonischen von $\Delta\Theta$ und einer q-Achsen-Komponente einer n-ten Harmonischen von $\Delta\Theta$ durch einen Tiefpassfilter oder einen Integrator; wobei $\Theta_{\_mn}$ ein mechanischer Winkel einer n-ten Harmonischen ist und $\Theta_{shift-Pn}$ ein Phasenkompensationswinkel einer n-ten Harmonischen ist; und

Eliminieren einer d-Achsen-Komponente und einer q-Achsen-Komponente einer oder mehrerer Harmonischen, um einen Filterprozess des Wellenfehlers $\Delta\theta$ abzuschließen;

wobei der Prozess zum Steuern eines Verdichters gemäß einem Drehmoment enthält:

Berechnen einer Differenz zwischen einer Zielwinkelgeschwindigkeitsschwankungsmenge und der Ausgangswinkelgeschwindigkeit, die durch den Phasenregelschleiferegler ausgegeben wird, um eine erste Winkelgeschwindigkeitsdifferenz zu erhalten (21) ;

Filtern der ersten Winkelgeschwindigkeitsdifferenz, um eine gefilterte Winkelgeschwindigkeit zu erhalten, bei der zumindest ein Teil der Winkelgeschwindigkeits-schwankung eliminiert ist (22);

Eingeben der gefilterten Winkelgeschwindigkeit als eine Eingabe in einen Drehzahlregler in einer Drehzahlschleife zur Verdichtersteuerung, um ein Ausgangsdrehmoment des Drehzahlreglers zu erhalten (23) ;

Steuern des Verdichters gemäß dem Ausgangsdrehmoment (24).

2. Verfahren nach Anspruch 1, **dadurch gekennzeichnet, dass** der Schritt zum Filtern des Wellenfehlers $\Delta\Theta$ zum Erhalten eines korrigierten Wellenfehlers $\Delta\Theta$, bei dem zumindest ein Teil von einer Wellenfehlerschwankung beseitigt ist (12), ferner enthält:

Filtern des Wellenfehlers $\Delta\Theta$ zum Beseitigen von zumindest einer d-Achsen-Komponente einer ersten Harmonischen und einer q-Achsen-Komponente einer ersten Harmonischen, um das Filtern der ersten harmonischen Komponente von $\Delta\Theta$ auszuführen und einen korrigierten Wellenfehler $\Delta\Theta$' zu erhalten, bei dem zumindest die erste harmonische Komponente beseitigt ist.

3. Verfahren nach Anspruch 2, **dadurch gekennzeichnet, dass** der Schritt zum Filtern des Wellenfehlers $\Delta\Theta$ zum Erhalten eines korrigierten Wellenfehlers $\Delta\Theta$, bei dem zumindest ein Teil einer Wellenfehlerschwankung beseitigt ist (12), ferner enthält:

Filtern des Wellenfehlers $\Delta\Theta$ zum Beseitigen einer d-Achsen-Komponente einer zweiten Harmonischen und einer q-Achsen-Komponente einer zweiten Harmonischen, um das Filtern der ersten harmonischen Komponente von $\Delta\Theta$ und der zweiten harmonischen Komponente von $\Delta\Theta$ auszuführen und einen korrigierten Wellenfehler $\Delta\Theta$' zu erhalten, bei dem die erste harmonische Komponente und die zweite harmonische Komponente beseitigt sind.

4. Verfahren nach Anspruch 1, **dadurch gekennzeichnet, dass** der Schritt zum Eliminieren einer d-Achsen-Komponente und einer q-Achsen-Komponente einer oder mehrerer Harmonischen, um einen Filterprozess des Wellenfehlers $\Delta\Theta$ abzuschließen, ferner enthält:

Extrahieren einer d-Achsen-Komponente einer n-ten Harmonischen von $\Delta\Theta$ und eine q-Achsen-Komponente einer n-ten Harmonischen von $\Delta\Theta$ durch einen Integrator;

wobei das Verfahren ferner enthält, dass:

jedes gefilterte Ergebnis inverser FourierTransformation unterzogen wird, um die Winkelgeschwindigkeitskompensationsmenge P_out zu erhalten, welche dem korrigierten Wellenfehler $\Delta\Theta$' entspricht, wobei eine oder mehrere harmonische Komponenten beseitigt sind.

**5.** Verfahren nach Anspruch 1, **dadurch gekennzeichnet, dass** ein Phasenkompensationswinkel $\Theta_{shift\text{-}Pn}$ gemäß Verstärkungsparametern $K_{P\_PLL}$ und $K_{I\_PLL}$ der geschlossenen Schleife und einem Winkelgeschwindigkeitsbefehl $\omega^*\_in$ in der Phasenregelschleife bestimmt wird, der Folgendes erfüllt:

$$\theta_{shift\text{-}Pn} = (aK_{P\_PLL} + bK_{I\text{-}PLL} + c\,{K_{P\_PLL}}\Big/{K_{I\_PLL}} + d\omega^*\_in)^* \pi$$

wobei a, b, c, d konstante Koeffizienten sind.

**6.** Verfahren nach einem der Ansprüche 1 bis 5, **dadurch gekennzeichnet, dass** der Schritt zum Filtern der ersten Winkelgeschwindigkeitsdifferenz, um eine gefilterte Winkelgeschwindigkeit zu erhalten, bei der zumindest ein Teil von Winkelgeschwindigkeits-schwankung eliminiert ist (22), ferner enthält:
Benutzen eines Geschwindigkeitsschwankungsextraktionsalgorithmus zum Extrahieren eines Teils einer Winkelschwankung aus der ersten Winkelgeschwindigkeitsdifferenz; Berechnen einer Differenz zwischen der ersten Winkelgeschwindigkeitsdifferenz und dem Teil der Winkelschwankung, und wobei die Differenz als die gefilterte Winkelgeschwindigkeit bestimmt wird.

**7.** Verfahren nach Anspruch 6, **gekennzeichnet durch** die Schritte zum Benutzen eines Geschwindigkeitsschwankungsextraktionsalgorithmus zum Extrahieren eines Teils einer Winkelgeschwindigkeitsdifferenz; Berechnen einer Differenz zwischen der ersten Winkelgeschwindigkeitsdifferenz und dem Teil der Winkelschwankung, und wobei die Differenz als die gefilterte Winkelgeschwindigkeit bestimmt wird, ferner enthält:
Benutzen des Geschwindigkeitsschwankungsextraktionsalgorithmus zum Extrahieren von zumindest einer ersten harmonischen Komponente in der ersten Winkelgeschwindigkeits-differenz, und wobei die erste harmonische Komponente als der Teil der Winkelgeschwindigkeitsschwankung bestimmt wird; Berechnen einer Differenz zwischen der ersten Winkelgeschwindigkeitsdifferenz und der ersten harmonischen Komponente, und wobei die Differenz als die gefilterte Winkelgeschwindigkeit bestimmt wird, bei der zumindest die erste harmonische Komponente beseitigt ist.

**8.** Verfahren nach Anspruch 7, **dadurch gekennzeichnet, dass** der Schritt zum Benutzen des Geschwindigkeitsschwankungsextraktionsalgorithmus zum Extrahieren von zumindest einer ersten harmonischen Komponente in der ersten Winkelgeschwindigkeitsdifferenz ferner enthält:

Expandieren der ersten Winkelgeschwindigkeitsdifferenz durch Fourier-Reihen, um einen Funktionsausdruck der ersten Winkelgeschwindigkeitsdifferenz bezüglich eines mechanischen Winkels $\Theta m$ zu erhalten;
Extrahieren einer d-Achsen-Komponente einer ersten Harmonischen und einer q-Achsen-Komponente einer ersten Harmonischen aus dem Funktionsausdruck;
Addieren der d-Achsen-Komponente der ersten Harmonischen und der q-Achsen-Komponente der ersten Harmonischen, um die erste harmonische Komponente in der ersten Winkelgeschwindigkeitsdifferenz zu erhalten.

**9.** Verfahren nach Anspruch 7, **dadurch gekennzeichnet, dass** der Schritt zum Benutzen eines Geschwindigkeitsschwankungsextraktionsalgorithmus zum Extrahieren von zumindest einem Teil einer Winkelschwankung aus der ersten Winkelgeschwindigkeitsdifferenz ferner enthält:

Benutzen des Geschwindigkeitsschwankungsextraktionsalgorithmus zum Extrahieren einer zweiten harmonischen Komponente in der ersten Winkelgeschwindigkeitsdifferenz, und wobei eine Summe der ersten harmonischen Komponente und der zweiten harmonischen Komponente als der Teil der Winkelgeschwindigkeitsschwankung bestimmt wird;
wobei der Schritt zum Berechnen einer Differenz zwischen der ersten Winkelgeschwindigkeitsdifferenz und dem Teil der Winkelschwankung, und wobei die Differenz als die gefilterte Winkelgeschwindigkeit bestimmt wird, ferner enthält:
Berechnen einer Differenz zwischen der ersten Winkelgeschwindigkeitsdifferenz und der Summe der ersten harmonischen Komponente und der zweiten harmonischen Komponente, und wobei die Differenz als die gefilterte Winkelgeschwindigkeit bestimmt wird, bei der die erste harmonische Komponente und die zweite harmonische Komponente beseitigt sind.

**10.** Verfahren nach Anspruch 1, **dadurch gekennzeichnet, dass** die Zielwinkelgeschwindigkeitsschwankungsmenge 0 ist;

wobei der Schritt zum Korrigieren der Echtzeitwinkelgeschwindigkeit ω1, die zur Verdichtersteuerung gemäß der kompensierten Winkelgeschwindigkeitsausgabe Δω' und Steuern des Verdichters gemäß der korrigierten Echtzeitwinkelgeschwindigkeit ω1 (15) benutzt wird, ferner enthält:

Addieren der kompensierten Winkelgeschwindigkeitsausgabe Δω' zu einem Winkelgeschwindigkeitsbefehl, und wobei die Summe als die korrigierte Echtzeitwinkelgeschwindigkeit ω1 bestimmt wird, die zur Verdichtersteuerung benutzt wird.

**Revendications**

**1.** Procédé de contrôle des fluctuations de vitesse d'un compresseur, **caractérisé par le fait que** le procédé comprend :
un processus de commande du compresseur en fonction d'une vitesse angulaire en temps réel et un processus de commande du compresseur en fonction d'un couple ;

le processus de commande du compresseur en fonction d'une vitesse angulaire en temps réel comprenant :

obtenir une erreur d'arbre $\Delta\theta$ qui reflète un écart entre une position réelle d'un rotor de compresseur par rapport à une position estimée d'un rotor de compresseur (11) ;
filtrer l'erreur d'arbre $\Delta\theta$ pour obtenir une erreur d'arbre corrigée $\Delta\theta'$ dans laquelle au moins une partie d'une fluctuation de l'erreur d'arbre est éliminée (12) et obtenir un montant de compensation de vitesse angulaire P_out correspondant à l'erreur d'arbre corrigée $\Delta\theta'$ (13) ;
compenser une vitesse angulaire de sortie $\Delta\omega$_PLL d'un régulateur à boucle à verrouillage de phase dans une boucle à verrouillage de phase pour commande de compresseur avec le montant de compensation de vitesse angulaire P_out pour obtenir une vitesse angulaire de sortie compensée $\Delta\omega'$ (14) ; la vitesse angulaire de sortie compensée étant $\Delta\omega'$ = P_out + $\Delta\omega$_PLL ;
corriger la vitesse angulaire en temps réel ω1 utilisée pour la commande du compresseur en fonction de la sortie de vitesse angulaire compensée $\Delta\omega'$ et commander le compresseur en fonction de la vitesse angulaire en temps réel corrigée ω1 (15);
dans lequel l'étape de filtrer l'erreur d'arbre $\Delta\theta$ (12) comprend :

développer en série de Fourier l'erreur d'arbre $\Delta\theta$ pour obtenir une expression fonctionnelle de l'erreur d'arbre par rapport à un angle mécanique $\theta$m ;
multiplier l'expression fonctionnelle de l'erreur d'arbre par $\cos(\theta_{mn} + \theta_{shift-Pn})$ et $-\sin(\theta_{mn} + \theta_{shift-Pn})$ respectivement ; extraire une composante d'axe d d'une nième harmonique de $\Delta\theta$ et une composante d'axe q d'une nième harmonique de $\Delta\theta$ par un filtre passe-bas ou un intégrateur ; dans laquelle $\theta$_mn est un angle mécanique d'une nième harmonique et $\theta_{shift-Pn}$ est un angle de compensation de phase d'une nième harmonique ; et
éliminer une composante d'axe d et une composante d'axe q d'une ou de plusieurs harmoniques pour compléter un processus de filtrage de l'erreur d'arbre $\Delta\theta$ ;

le processus de commande du compresseur en fonction d'un couple, comprenant :

calculer une différence entre une valeur cible de fluctuation de vitesse angulaire et la vitesse angulaire de sortie émise par le régulateur à boucle à verrouillage de phase afin d'obtenir une première différence de vitesse angulaire (21);
filtrer la première différence de vitesse angulaire pour obtenir une vitesse angulaire filtrée dans laquelle au moins une partie de la fluctuation de vitesse angulaire a été éliminée ;
entrer la vitesse angulaire filtrée en tant qu'entrée d'un régulateur à boucle de vitesse dans une boucle de vitesse pour commande de compresseur afin d'obtenir un couple de sortie du régulateur à boucle de vitesse (23) ;
commander le compresseur en fonction du couple de sortie (24).

**2.** Procédé selon la revendication 1, **caractérisé en ce que** l'étape de filtrage de l'erreur d'arbre $\Delta\theta$ pour obtenir une erreur d'arbre corrigée $\Delta\theta'$ dans laquelle au moins une partie de la fluctuation de l'erreur d'arbre est éliminée (12) comprend en outre :
filtrer l'erreur d'arbre $\Delta\theta$ pour au moins supprimer une composante d'axe d d'une première harmonique et une composante d'axe q d'une première harmonique pour réaliser le filtrage de la première composante harmonique de $\Delta\theta$ et obtenir l'erreur d'arbre corrigée $\Delta\theta'$ dans laquelle au moins la première composante harmonique est supprimée.

**3.** Procédé selon la revendication 2, **caractérisé en ce que** l'étape consistant à filtrer l'erreur d'arbre $\Delta\theta$ pour obtenir une erreur d'arbre corrigée $\Delta\theta'$ dans laquelle au moins une partie de la fluctuation de l'erreur d'arbre est éliminée (12) comprend en outre :
filtrer l'erreur d'arbre $\Delta\theta$ pour supprimer une composante d'axe d d'une seconde harmonique et une composante d'axe q d'une seconde harmonique pour réaliser le filtrage de la première composante harmonique de $\Delta\theta$ et de la seconde composante harmonique de $\Delta\theta$, et pour obtenir l'erreur d'arbre corrigée $\Delta\theta'$ dans laquelle la première composante harmonique et la seconde composante harmonique sont supprimées.

**4.** Procédé selon la revendication 1, **caractérisé en ce que** l'étape d'élimination d'une composante d'axe d et d'une composante d'axe q d'une ou plusieurs harmoniques pour compléter un processus de filtrage de l'erreur d'arbre $\Delta\theta$ comprend en outre :

   extraire une composante d'axe d d'une nième harmonique de $\Delta\theta$ et une composante d'axe q d'une nième harmonique de $\Delta\theta$ par un intégrateur ;
   le procédé comprend en outre
   chaque résultat filtré est soumis à une transformée de Fourier inverse pour obtenir le montant de compensation de vitesse angulaire P_out correspondant à l'erreur d'arbre corrigée $\Delta\theta'$ dans laquelle une ou plusieurs composantes harmoniques sont supprimées.

**5.** Procédé selon la revendication 1, **caractérisé en ce qu'**un angle de compensation de phase $\theta_{shift-Pn}$ est déterminé en fonction de paramètres de gain en boucle fermée $K_{P\_PLL}$ et $K_{I\_PLL}$ et d'une commande de vitesse angulaire $\omega^*\_in$ de la boucle à verrouillage de phase, qui satisfait :

$$\theta_{shift-Pn} = (aK_{P\_PLL} + bK_{I\_PLL} + cK_{P\_PLL}/K_{I\_PLL} + d\omega^*\_in)*\pi$$

dans laquelle a, b, c, d sont des coefficients constants.

**6.** Procédé selon l'une quelconque des revendications 1 à 5, **caractérisé en ce que** l'étape de filtrage de la première différence de vitesse angulaire pour obtenir une vitesse angulaire filtrée dans laquelle au moins une partie de la fluctuation de vitesse angulaire est éliminée (22) comprend en outre :
utiliser un algorithme d'extraction de fluctuation de vitesse pour extraire de la première différence de vitesse angulaire une partie de la fluctuation angulaire ; calculer une différence entre la première différence de vitesse angulaire et la partie de la fluctuation angulaire, et la différence est considérée comme étant la vitesse angulaire filtrée.

**7.** Procédé selon l'une quelconque de la revendication 6, **caractérisé par le fait que** les étapes consistant à utiliser un algorithme d'extraction de fluctuation de vitesse pour extraire de la première différence de vitesse angulaire une partie de la fluctuation angulaire ; à calculer une différence entre la première différence de vitesse angulaire et la partie de la fluctuation angulaire, et à déterminer la différence comme étant la vitesse angulaire filtrée, comprennent en outre :
utiliser l'algorithme d'extraction de fluctuations de vitesse pour extraire au moins une première composante harmonique dans la première différence de vitesse angulaire, et la première composante harmonique est déterminée comme étant la partie de la fluctuation de vitesse angulaire ; calculer une différence entre la première différence de vitesse angulaire et la première composante harmonique, et la différence est considérée comme étant la vitesse angulaire filtrée dans laquelle au moins la première composante harmonique est supprimée.

**8.** Procédé selon l'une quelconque de la revendication 7, **caractérisé par le fait que** l'étape consistant à utiliser l'algorithme d'extraction de fluctuations de vitesse pour extraire au moins une première composante harmonique dans la première différence de vitesse angulaire comprend en outre :

développer en série de Fourier la première différence de vitesse angulaire pour obtenir une expression fonctionnelle de la première différence de vitesse angulaire par rapport à un angle mécanique θm ;
extraire de l'expression fonctionnelle une composante d'axe d d'une première harmonique et une composante d'axe q d'une première harmonique;
ajouter la composante d'axe d de la première harmonique et la composante d'axe q de la première harmonique pour obtenir la première composante harmonique dans la première différence de vitesse angulaire.

**9.** Procédé selon l'une quelconque de la revendication 7, **caractérisé en ce que** l'étape consistant à utiliser un algorithme d'extraction de fluctuation de vitesse pour extraire de la première différence de vitesse angulaire une partie de la fluctuation angulaire comprend en outre :

utiliser l'algorithme d'extraction de fluctuation de vitesse pour extraire de la première différence de vitesse angulaire une deuxième composante harmonique, et une somme de la première composante harmonique et de la deuxième composante harmonique est considérée comme étant la partie de la fluctuation de vitesse angulaire ;
l'étape consistant à calculer une différence entre la première différence de vitesse angulaire et la partie de la fluctuation angulaire, et à considérer la différence comme étant la vitesse angulaire filtrée, comprend en outre :
calculer une différence entre la première différence de vitesse angulaire et la somme de la première composante harmonique et de la deuxième composante harmonique, et la différence est considérée comme étant la vitesse angulaire filtrée dans laquelle la première composante harmonique et la seconde composante harmonique sont supprimées.

**10.** Procédé selon l'une quelconque de la revendication 1, **caractérisé par le fait que** la valeur cible du montant de fluctuation de vitesse angulaire est 0 ;
l'étape consistant à corriger la vitesse angulaire en temps réel ωl qui est utilisée pour la commande du compresseur en fonction de la sortie de vitesse angulaire compensée Δω' et à commander le compresseur en fonction de la vitesse angulaire corrigée en temps réel ωl (15) comprend en outre :
ajouter la sortie de vitesse angulaire compensée Δω' à une commande de vitesse angulaire, et la somme est considérée comme la vitesse angulaire corrigée en temps réel ωl qui est utilisée pour la commande du compresseur.

Obtaining a shaft error which reflects a deviation of an actual position of a compressor rotor from an estimated position of a compressor rotor ⟩ 11

Filtering the shaft error to obtain a corrected shaft error in which at least a part of a shaft error fluctuation is eliminated ⟩ 12

Obtaining an angular velocity compensation amount according to the corrected shaft error ⟩ 13

Compensating an output angular velocity of the phase-locked loop regulator in the phase-locked loop for compressor control with the angular velocity compensation amount so as to obtain a compensated angular velocity output ⟩ 14

Correcting the real-time angular velocity which is used for compressor control according to the compensated output angular velocity and controlling the compressor according to the corrected real-time angular velocity ⟩ 15

**Fig.1**

Calculating a difference between the target angular velocity fluctuation amount and the output angular velocity to obtain a first angular velocity difference — 21

Filtering the first angular velocity difference to obtain a filtered angular velocity in which at least a part of an angular velocity fluctuation is eliminated — 22

Inputting the filtered angular velocity as an input to the speed loop regulator in the speed loop for compressor control to obtain an output torque of the speed loop regulator — 23

Controlling the compressor according to the output torque — 24

# Fig.2

**Fig.3**

**Fig.4**

**Fig.5**

**EP 3 896 365 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 103967794 A